(19) Europäisches Patentamt
European Patent Office
Office européen des brevets

(11) Veröffentlichungsnummer: **0 001 093**
**B1**

(12) # EUROPÄISCHE PATENTSCHRIFT

(45) Veröffentlichungstag der Patentschrift: **08.04.81**

(51) Int. Cl.³: **C 07 F 7/22, C 08 K 5/57**

(21) Anmeldenummer: **78100786.9**

(22) Anmeldetag: **30.08.78**

(54) **Organozinnverbindungen, Verfahren zu deren Herstellung und deren Verwendung als Zwischenprodukte für Stabilisatoren.**

(30) Priorität: **09.09.77 CH 11065/77**

(43) Veröffentlichungstag der Anmeldung:
**21.03.79 Patentblatt 79/6**

(45) Bekanntmachung des Hinweises auf die Patenterteilung:
**08.04.81 Patentblatt 81/14**

(84) Benannte Vertragsstaaten:
**DE FR GB NL**

(56) Entgegenhaltungen:
**DE - A - 1 963 569**

**CHEMISTRY OF THE CYANO GROUP ZVI RAPPOPORT, 1970, Interscience Publisher Seite 264**

(73) Patentinhaber: **CIBA-GEIGY AG**
***Patentabteilung Postfach***
**CH-4002 Basel (CH)**

(72) Erfinder: **Wehner, Wolfgang, Dr.**
**Wetzbach 34**
**D-6144 Zwingenberg (DE)**
Erfinder: **Wirth, Hermann O., Dr.**
**Lessingstrasse 24**
**D-6140 Bensheim 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Organozinnverbindungen, Verfahren zu deren Herstellung und deren Verwendung als Zwischenprodukte für Stabilisatoren

Die vorliegende Erfindung betrifft carbofunktionelle Organozinnverbindungen, ein Verfahren zu deren Herstellung und deren Verwendung.

Organozinnverbindungen geniessen ein erhebliches wirtschaftliches Interesse als Stabilisatoren für halogenhaltige Thermoplaste. In letzter Zeit sind hierbei auch carbofunktionelle Organozinnverbindungen vorgeschlagen worden.

Alle bekannten Organozinnverbindungen sind jedoch nur mässig als Biozide geeignet.

Zur Herstellung von bekannten Organozinnverbindungen gibt es verschiedene Möglichkeiten. So ist z.B. in der DT—OS 1 963 569 allgemein beschrieben, dass Halogenzinnsäure in Gegenwart polarer Lösungsmittel mit Olefinen reagiert, wobei das Olefin funktionelle Gruppen enthalten kann. Als Beispiel wird Acrylnitril genannt. Es wurd jedoch gefunden, dass bei dieser Umsetzung die gewünschte Verbindung in nur unzureichenden Ausbeuten erhalten wird. Ausserdem treten bei diesem Verfahren unerwünschte Nebenreaktionen ein.

Auch nach einem in der DT—OS 2 540 210 vorgeschlagenen Verfahren sind Monoorganozinnverbindungen zugänglich. Ihre Darstellung erfolgt über die Umsetzung von Zinndihalogenid mit Halogenwasserstoff und einem entsprechenden Olefin. Das hierin beschriebene Verfahren ist jedoch auf solche Olefine beschränkt, die eine Carbonylgruppe in Konjugation zur Doppelbindung enthalten. Dieses Verfahren lässt sich nicht ohne weiteres auf andere substituierte Vinylverbindungen übertragen, z.B. Nitrile.

Es besteht jedoch das Interesse nach wirtschaftlichen Herstellungsverfahren von Monoorganozinnderivaten unter Verwendung leicht zugänglicher Ausgangsverbindungen.

Die Aufgabe der vorliegenden Erfindung besteht in der Bereitstellung von neuen carbofunktionellen Organozinnverbindungen, welche hervorragend als Biozide geeignet sind und gleichzeitig auch als Katalysatoren bzw. Katalysatorkomponenten für die Polyurethanherstellung einsetzbar sind. Ausserdem sollen diese neuen Organozinnverbindungen wie entsprechende bekannte Organozinnverbindungen für die Herstellung von Stabilisatoren für halogenhaltige Thermoplaste anwendbar sein. Weiter liegt die Aufgabe der Erfindung auch in der wirtschaftlichen Herstellung der erfindungsgemässen Verbindungen.

Gegenstand der Erfindung ist eine Organozinnverbindung der allgemeinen Formel

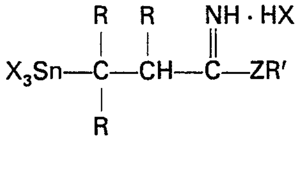 (I),

worin

X ein Chlor-, Brom- oder Jodatom ist.
R ein Wasserstoffatom und/oder Alkyl ist,
Z ein Sauerstoff- oder Schwefelatom ist, und
R' eine gegebenenfalls eine funktionelle Gruppe enthaltende Kohlenwasserstoffgruppe aliphatischen, cycloaliphatischen oder aromatischen Charakters darstellt.

X bedeutet aus überwiegend wirtschaftlichen Gründen vorzugsweise ein Chloratom. R ist vorzugsweise Wasserstoff und/oder Methyl, insbesondere Wasserstoff, wobei sich diese Bevorzugung durch die leicht zugänglichen Nitrile Acrylnitril, Methacrylnitril, Crotonitril und $\beta$-Dimethylacrylnitril ergibt.

R' als Kohlenwasserstoffgruppe kann hierbei sein: lineares oder verzweigtes Alkyl, gegebenenfalls substituiertes Cycloalkyl, Cycloalkylalkyl, Aryl oder Aralkyl, wobei der Substituent bevorzugt Alkyl ist, das funktionelle Gruppen enthalten kann. Cycloalkyl ist bevorzugt Cyclohexyl, Aryl gleich Phenyl und Aralkyl gleich Benzyl. R' enthält bevorzugt 1 bis 12 C-Atome, das insbesondere Cycloalkyl oder lineares oder verzweigtes Alkyl darstellt.

Sofern R' mit funktionellen Gruppen substituiert ist, sind diese z.B. Hydroxyl, Thiol, Alkoxy, Alkylthio, Carboxyl und Carbalkoxy.

Beispiele für R' sind:

Methyl, Aethyl, n- oder i-Propyl, n-, i- und t-Butyl, Pentyl, Hexyl, Heptyl, 2-Hexyl, 3-Heptyl, Octyl, 2-Aethylhexyl, Nonyl, Decyl, Undecyl, Dodecyl, Cyclopentyl, Cyclohexyl, Methylcyclohexyl, Cyclohexylmethyl, Methylcyclohexylmethyl, Phenyl, Methylphenyl, Aethylphenyl, Butylphenyl, Octylphenyl, Naphthyl, Benzyl, Methylbenzyl, Octylbenzyl, $\alpha$- oder $\beta$-Phenyläthyl.

Beispiel für R' mit funktionellen Gruppen sind:

$\beta$-Hydroxyäthyl, $\beta$-Mercaptoäthyl, Methoxyäthyl, Butoxyäthyl, Octoxyäthyl, Methylthioäthyl, Propylthioethyl, Carboxymethyl, $\beta$-Carboxyethyl sowie Carboalkoxyalkyl z.B. Carbomethoxymethyl, Carboäthoxypropyl, Carbobutoxyethyl, Carbododecyloxymethyl.

Eine bevorzugte erfindungsgemässe Verbindung der angegebenen Formel ist das Trichlor-(2-äthoxycarbonimidoyläthyl)-Zinn·HCl.

Weiterer Gegenstand der Erfindung ist ein Verfahren zur Herstellung der erfindungsgemässen Organozinnverbindungen der angegebenen Formel durch die direkte Umsetzung eines Zinndihalogenides mit einem ungesättigten Nitril der Formel

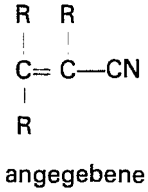

worin R die zuvor angegebene Bedeutung hat,

und Chlor-, Brom- oder Jodwasserstoff, welches dadurch gekennzeichnet ist, dass man die Reaktion in Gegenwart eines Alkohols R'OH durchführt und zur Herstellung der Thioiminoester die Iminoester mit einem Merkaptan R'SH umgesetzt werden.

Bei dem erfindungsgemässen Herstellungsverfahren kann das Zinndihalogenid in verschiedener Form eingesetzt werden, z.B. als aufgeschmolzenes wasserfreies Salz in Form von Schuppen oder Blättchen oder als getrocknetes Salz in Pulver- oder Staubform. Weiter ist es möglich, die Reaktion im überschüssigen Reaktanden (Alkohol und/oder Nitril) oder einem zusätzlichen Lösungsmittel durchzuführen. Geeignete Lösungsmittel sind hierbei inerte Lösungsmittel wie z.B. solche mit Aether-, Carbonsäureester-, Keto- oder Sulfonfunktionen oder Kohlenwasserstoffe sowie halogenierte Kohlenwasserstoffe oder Säureamide, z.B. Methylenchlorid, Chloroform, Toluol oder Dimethylformamid.

Bei der erfindungsgemässen Umsetzung ist es als wesentlich anzusehen, dass neben dem ungesättigten Nitril ein Alkohol vorzugsweise in mindestens molarem Verhältnis vorliegt, wobei dieses etwa 1:1 bis 1:1,2 sein kann.

Die Reaktionstemperatur beträgt im allgemeinen —30 bis 100°C, vorzugsweise 20—50°C. Die Reaktion wird vorteilhaft unter Normaldruck oder geringem Ueberdruck durchgeführt.

Im einzelnen wird so verfahren, dass das Zinndihalogenid und die Reaktanden mit oder ohne Lösungsmittel vorgelegt werden und der Halogenwasserstoff (vorzugsweise HCl) eingeleitet wird.

Es ist aber auch möglich, das Zinndihalogenid im Lösungsmittel vorzulegen und die Reaktanden und Halogenwasserstoffgas gleichzeitig zuzugeben. In diesem Fall ist es vorteilhaft, nach dem Gegenstromprinzip zu arbeiten, wobei auch eine kontinuierliche Verfahrensführung möglich ist.

In einer weiteren Ausführungsform kann stufenweise vorgegangen werden, indem man zunächst in einem geeigneten Lösungsmittel Trichlorstannan herstellt und danach mit dem ungesättigten Nitril in Gegenwart eines Alkoholes umsetzt. Das Trichlorstannan kann hierbei durch die Einwirkung von Halogenwasserstoff auf Zinndihalogenid oder Zinn in polaren Lösungsmitteln, besonders Aethern, erzeugt werden.

Die Umsetzung der Iminoester mit Merkaptanen kann in den gleichen Lösungsmitteln durchgeführt werden, wie si zuvor genannt wurden. Mitunter kann auch das Merkaptan als Lösungsmittel dienen, wozu man einen Ueberschuss verwendet. Ansonsten sind stöchiometrische Mengenverhältnisse bevorzugt. Für diese Umsetzung können die für Umesterungen üblichen sauren und basischen Katalysatoren verwendet werden, z.B. Protonen- oder Lewissäuren oder Alkalimetallalkoholate. Es kann aber auch ohne Katalysator gearbeitet werden. Bevorzugt wird in Gegenwart von HCl (gasförmig bzw. gelöst) gearbeitet. Die Iminoester brauchen nicht vor der Reaktion isoliert werden, sondern es kann das bei der ersten Umsetzung erhaltene Reaktionsgemisch direkt eingesetzt werden.

Mit dem erfindungsgemässen Verfahren werden überraschende die wertvollen neuen Organozinnverbindungen auf einfache Weise wirtschaftlich in hohen Ausbeuten und unter sehr milden Reaktionsbedingungen erhalten, wobei leicht zugängliche und billige Rohstoffe als Ausgangsmaterialien verwendet werden können.

Bei den erfindungsgemässen Organozinnverbindnungen handelt es sich um amorphe oder kristalline, flüssige bis zäh viskose oder teilweise harzartige Substanzen, die farblos und teilweise wasserlöslich oder löslich in organischen Lösungsmitteln sind. Sie eignen sich hervorragend als wirksame Biocide. Ferner sind sie auch als Katalysatoren bzw. Katalysatorkomponenten für die Polyurethanherstellung geeignet.

Schliesslich können die erfindungsgemässen Verbindungen als Zwischenprodukte für die Herstellung von Stabilisatoren für halogenhaltige Thermoplaste verwendet werden. Zum Beispiel können durch Hydrolyse Organozinnverbindungen der in der DT—OS 2 540 210 beschriebenen Art hergestellt werden, die ihrerseits nach den darin beschriebenen Verfahren in Stabilisatoren umgewandelt werden können.

Die nachfolgenden Beispiele dienen der näheren Erläuterung der Erfindung. Teile bedeuten hierin Gewichtsteile.

Beispiel 1

In einem Dreihalskolben mit Rührer, Rückflusskühler und Blasenzähler werden bei 20°C 37,9 Teile trockenes $SnCl_2$, 10,6 Teile Acrylnitril und 9,2 Teile absolutes Aethanol in 50 Teilen Dimethoxyäthan (DME) vorgelegt. Unter Rühren leitet man einen trockenen Strom HCl-Gas durch die Mischung, der so reguliert wird, dass die Temperatur 55°C nicht übersteight. Nach ca. Stunden ist die Umsetzung beendet (HCl-Sättigung). Die klare Reaktionslösung wird im Vakuum von flücktigen Bestandteilen befreit. Im farblosen Rückstand ist praktisch kein $Sn^{2+}$ nachweisbar. Das $^1$HMR-Spektrum steht mit der folgenden Struktur in Einklang:

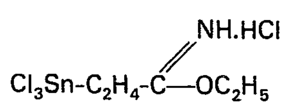

Beispiel 2

Die Reaktanden des Beispieles 1 werden unter den gleichen Bedingungen in Chloroform als Lösungsmittel zur Reaktion gebracht. Nach 4 Stunden erhält man eine breiige Reaktionsmasse, aus der sich ein farbloser Feststoff mit einem Smp. von 130—132°C (Zersetzung) isolieren lässt, dessen [1]HMR-Spektrum mit dem von Beispiel 1 übereinstimmt. Mittels komplexometrischer Titration wird ein $Sn^{2+}$-Gehalt von nur 0,2% gemessen.

Beispiel 3

In der Reaktion gemäss Beispiel 2 wird das Aethanol durch 26,5 Teile Glykolsäure-n-butylester ersetzt. Die Reaktion ist nach 5 Stunden beendet. Gemäss dem [1]HMR-Spektrum hat die erhaltene Verbindung die Struktur.

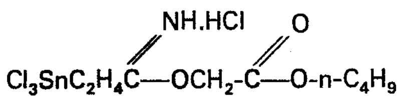

Beispiel 4

Es wird die Reaktion von Beispiel 1 mit 15,2 Teilen Glykolsäure in 200 Teilen eines 1:1-Gemisches aus DME und $CHCl_3$ als Lösungsmittel wiederholt. Die Reaktionszeit beträgt 5 Stunden. Man erhält, nachgewiesen durch das [1]HMR- Spektrum:

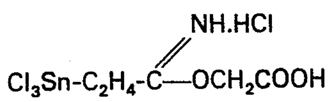

Beispiel 5

Gemäss Beispiel 2 wird die Umsetzung mit 18,8 Teilen Phenol anstelle von Aethanol durchgeführt. Nach 3,5 Stunden erhält man in 82%iger Ausbeute einen farblosen Feststoff, der bei 118—120°C unter Zersetzung schmilzt. Das [1]HMR-Spektrum steht mit der folgenden Struktur in Einklang:

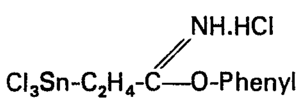

Beispiel 6

Analog Beispiel 2 wird die Umsetzung mit 21,6 Teilen Benzylalkohol wiederholt. Nach 6 Stunden Reaktionszeit erhält man nach Abziehen der flüchtigen Bestandteile einen farblosen Rückstand, dem gemäss [1]HMR-Spektrum folgende Struktur zukommt:

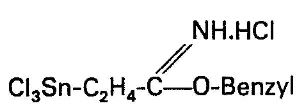

Beispiel 7

Gemäss Beispiel 1 wird eine Umsetzung im Lösungsmittelgemisch des Beispieles 4 durchgeführt, in der das Aethanol durch 6,2 Teile Aethylenglykol (über Molekularsieb getrocknet und destilliert) ersetzt ist. Nach 5 Stunden erhält man einen hockviskosen Rückstand. Das [1]HMR-Spektrum ergibt für die Verbindung die Struktur

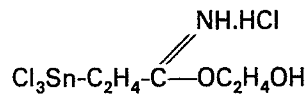

Beispiel 8

(Vergleich)

Gemäss Beispiel 1 werden 37,9 Teile $SnCl_2$, 10,6 Teile Acrylnitril in 70 Teilen Dimethoxyäthan mit HCl-Gas umgesetzt. Nach 4-stündiger Reaktionszeit erhält man eine hellgelbe Lösung, in der über eine Alkylierung $SnCl_4$ als $Hexyl_4Sn$ nachweisbar ist. Im NH-Bereich des [1]HMR-Spektrums sind 4 Substanzen nachweisbar.

Nach einiger Zeit kristallisiert aus der Lösung ein Produkt aus, in dem [1]HMR-spektroskopisch 2 Substanzen nachgewiesen werden. Gemäss dem IR-Spektrum ist jedoch kein $Cl_3SnC_2H_4CN$ nachweisbar.

Beispiel 9

(Vergleich)

Die Reaktion gemäss Beispiel 8 wird wiederholt Nach 7 Stunden Reaktionszeit werden unter weiterem Einleiten von HCl-Gas 9,2 Teile Aethanol zugegeben. Nach der Aufarbeitung kann keine Substanz gemäss Beispiel 1 nachgewiesen werden, die bei einem intermediären Auftreten des $Cl_3SnC_2H_4CN$ entstanden sein müsste.

Beispiel 10

Herstellung von

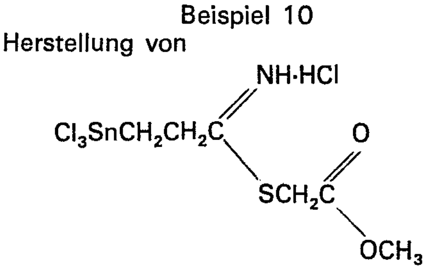

18,1 Teile der gemäss Beispiel 1 hergestellten Verbindung werden in der gleichen Apparatur mit 5,3 Teilen Thioglykolsäuremethylester und 100 Teilen Dimethoxyäthan versetzt. In die Lösung wird ca. 2 Stunden bis zur Sättigung HCl-Gas eingeleitet. Danach wird eine geringe Menge Niederschlag abfiltriert und die flüchtigen Bestandteile im Vakuum abgezogen. Es hinterbleibt ein hellgelbes viskoses. Oel, in dem sich als Hauptbestandteil [1]HMR-spektroskopisch die Titelverbindung charakterisieren lässt.

**Patentansprüche**

1. Organozinnverbindungen der allgemeinen Formel I

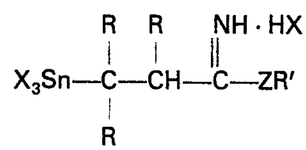 (I),

worin
Z ein Chlor-, Brom- oder Jodatom ist,
R ein Wasserstoffatom und/oder Alkyl ist,
Z ein Sauerstoff- oder Schwefelatom ist, und
R′ eine gegebenenfalls eine funktionelle Gruppe enthaltende Kohlenwasserstoffgruppe aliphatischen, cycloaliphatischen oder aromatischen Charakters darstellt.

2. Organozinnverbindung gemäss Anspruch 1, worin X ein Chloratom bedeutet.

3. Organozinnverbindung gemäss Anspruch 1, worin R ein Wasserstoffatom oder Methyl ist.

4. Organozinnverbindung gemäss Anspruch 1, worin die Kohlenwasserstoffgruppe R′ 1 bis 12 C-Atome enthält und R′ lineares oder verzweigtes Alkyl oder Cycloalkyl ist.

5. Organozinnverbindung gemäss Anspruch 1, Trichlor-(2-Aethoxycarbonimidoyl-äthyl)-Zinn·HCl.

6. Verfahren zur Herstellung von Organozinnverbindungen nach Anspruch 1 der Formel I durch direkte Umsetzung eines Zinndihalogenides mit einem ungesättigten Nitril der Formel

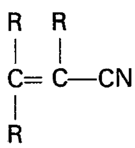

worin R die zuvor angegebene Bedeutung hat, und Chlor-, Brom- oder Jodwasserstoff, dadurch gekennzeichnet, dass man die Reaktion in Gegenwart eines Alkoholes R′OH durchführt und zur Herstellung der Iminothioester die Iminoester mit einem Merkaptan R′SH umgesetzt werden.

7. Verfahren gemäss Anspruch 6, dadurch gekennzeichnet, dass X ein Chloratom darstellt, R ein Wasserstoffatom und/oder Methyl ist, die Kohlenwasserstoffgruppe R′ 1 bis 12 C-Atome enthält und lineares oder verzweigtes Alkyl oder Cycloalkyl ist.

8. Verfahren gemäss Anspruch 6, dadurch gekennzeichnet, dass R′ als funktionelle Gruppen Hydroxyl, Thiol, Alkoxy, Alkylthio, Carboxyl und Carbalkoxy enthält.

9. Verfahren gemäss Anspruch 6, dadurch gekennzeichnet, dass die Umsetzung in Gegenwart eines inerten Lösungsmittels mit bevorzugt Halogen-, Aether-, Carbonsäureester- oder Sulfonfunktion durchgeführt wird, wobei der Alkohol und/oder das Nitril im Ueberschuss verwendet wird und das molare Verhältnis von Nitril zu Alkohol 1:1,2 bis 1:1 beträgt.

10. Verfahren gemäss Anspruch 6, dadurch gekennzeichnet, dass die Umsetzung bei einer Temperatur von −30 bis 100°C, vorzugsweise 20—50°C und vorzugsweise Normaldruck oder leichtem Ueberdruck durchgeführt wird.

11. Verwendung von Organozinnverbindungen gemäss Anspruch 1 als Zwischenprodukte zur Herstellung von Organozinnstabilisatoren für halogenhaltige Thermoplaste.

## Claims

1. An organotin compound of the general formula

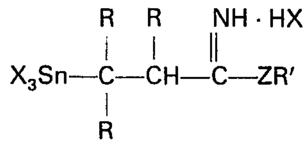

(I),

wherein
X is a chlorine, bromine or iodine atom,
R is a hydrogen atom and/or an alkyl radical,
Z is an oxygen or sulfur atom, and
R′ is a hydrocarbon group of aliphatic, cycloaliphatic or aromatic character which can contain functional groups.

2. An organotin compound according to claim 1, wherein X is a chlorine atom.

3. An organotin compound according to claim 1, wherein R is a hydrogen atom or methyl.

4. An organotin compound according to claim 1, wherein the hydrocarbon group R′ contains 1 to 12 carbon atoms and is linear or branched alkyl or cycloalkyl.

5. Trichloro-(2-ethoxycarboximidoylethyl) tin hydrochloride according to claim 1.

6. A process for the production of an organotin compound of the formula 1 according to claim 1, by the direct reaction of a tin dihalide with an unsaturated nitrile of the formula

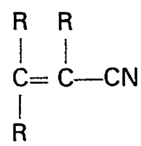

wherein R has the meaning given above, and hydrogen chloride, bromide or iodide, characterised in that the reaction is carried out in the presence of an alcohol R′OH and, for the production of an iminothio ester, the imino ester is reacted with a mercaptan R′SH.

7. A process according to claim 6, characterised in that X is a chlorine atom, R is a hydrogen atom and/or methyl, the hydrocarbon group R′ contains 1 to 12 carbon atoms and is linear or branched alkyl or cycloalkyl.

8. A process according to claim 6, characterised in that R′ contains hydroxyl, thiol, alkoxy, alkylthio, carboxyl and carbalkoxy as functional groups.

9. A process according to claim 6, characterised in that the reaction is carried out in the presence of an inert solvent with preferably halogen, ether, carboxylic acid ester or sulphone function, using an excess of alcohol and/or nitrile such that the molar ratio of nitrile to alcohol is 1:1.2 to 1:1.

10. A process according to claim 6, characterised in that the reaction is carried out at a temperature of −30° to 100°C, preferably 20° to 50°C, and preferably under normal or slight excess pressure.

11. Use of an organotin compound according to claim 1 as intermediate for the production of an organotin stabiliser for halogen-containing thermoplastics.

## Revendications

1. Composés organostanniques répondant à la formule générale I

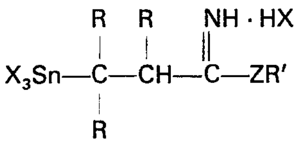

(I),

dans laquelle
X représente un atome de chlore, de brome ou d'iode,
R représente un atome d'hydrogène et/ou un radical alkyle,
Z représente un atome d'oxygène ou de soufre et
R′ représente un radical hydrocarboné de caractére aliphatique, cycloaliphatique ou aromatique, qui contient éventuellement un groupe fonctionnel.

2. Composé organostannique selon la revendication 1 dans lequel X représente un atome de chlore.

3. Composé organostannique selon la revendication 1 dans lequel R représente un atome d'hydrogène ou un radical méthyle.

4. Composé organostannique selon la revendication 1 dans lequel le radical hydrocarboné R′ conteint de 1 à 12 atomes de carbone et est un radical alkyle linéaire ou ramifié ou un radical cycloalkyle.

5. Composé organostannique selon la revendication 1, en l'espèce le trichloro-(éthoxycarbonimidoyl-2 éthyl)-étain.HCl.

6. Procédé de préparation de composés organostanniques de formule I selon la revendication 1, par réaction directe d'un dihalogénure d'étain avec un nitrile insaturé répondant à la formule

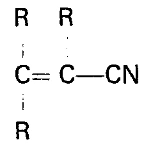

dans laquelle R a la signification donnée à la revendication 1, et avec du chlorure, du bromure ou de l'iodure d'hydrogène, procédé caractérisé en ce qu'on effectue la réaction en présence d'un alcool R′OH et, pour préparer l'ester thiocarboximidique, on fait réagir l'ester carboximidique avec un mercaptan R′SH.

7. Procédé selon la revendication 6, caractérisé en ce que X représente un atome de chlore, R représente un atome d'hydrogène et/ou un radical méthyle, le radical hydrocarboné R′ contient de 1 à 12 atomes de carbone et est un radical alkyle linéaire ou ramifié ou un radical cycloalkyle.

8. Procédé selon la revendication 6, caractérisé en ce que R′ contient, en tant que groupes fonctionnels, des groupes hydroxy, mercapto, alcoxy, alkylthio, carboxy et alcoxycarbonyles.

9. Procédé selon la revendication 6, caractérisé en ce qu'on effectue la réaction en présence d'un solvant inerte contenant de préférence une fonction halogène, éther, ester carboxylique ou sulfone, l'alcool et/ou le nitrile étant utilisé en excès et le rapport molaire du nitrile à l'alcool étant compris entre 1:1,2 et 1:1.

10. Procédé selon la revendication 6, caractérisé en ce qu'on effectue la réaction à une température de −30 à 100°C, de préférence de 20 à 50°C, et de préférence souse la pression normale ou souse une légère surpression.

11. Utilisation de composés organostanniques selon la revendication 1 comme corps intermédiaires pour la préparation de stabilisants organostanniques destinés à des matières thermoplastiques halogénées.